# EUROPEAN PATENT SPECIFICATION

(11) **EP 2 746 042 B1**
(45) Date of publication and mention of the grant of the patent: **03.05.2017**
(21) Application number: 13197436.2
(22) Date of filing: 16.12.2013
(51) Int. Cl.: B32B 5/26, B29D 24/00, B29D 99/00, B32B 3/12

(54) **Methods for fabricating stabilized honeycomb core composite laminate structures**
Verfahren zur Herstellung stabilisierter Wabenkern-Verbundlaminatstrukturen
Procédés de fabrication de structures stratifiées composites à âme en nid d'abeilles stabilisée

(30) Priority: 19.12.2012 US 201261739233 P
(43) Date of publication of application: 25.06.2014
(73) Proprietor: Embraer, S.A., São José dos Campos, 12227-901- SP (BR)
(72) Inventor: Matsura, Luciane, 12227-901 Sao José Dos Campos (BR); De Mattos, Cristiano Tavares, 12227-901 Sao José Dos Campos (BR); Da Silva, Fabiano, 12227-901 Sao José Dos Campos (BR); Filho, Joao Batista Ribeiro Teixeira, 12227-901 Sao José Dos Campos (BR); Leite, Jose Alves, 12227-901 Sao José Dos Campos (BR); Braga, Marizete Borges, 12227-901 Sao José Dos Campos (BR)
(74) Representative: Liesegang, Eva

(56) References cited:
- EP-A1- 1 724 306
- WO-A2-99/61233
- US-A1- 2005 126 699

## Description

### FIELD

The embodiments disclosed herein relate generally to processes for fabricating stabilized honeycomb core composite laminate structures. In a preferred aspect, the invention is embodied in processes whereby a honeycomb core preform is stabilized by subjecting the preform to high temperature ambient atmospheric cure conditions such that the resulting stabilized preform (post cure) may then be laid up with a final laminate layer and thereafter subjected to high temperature and high pressure autoclave curing.

### BACKGROUND

Aircraft manufacturers continuously attempt to improve aircraft performance by reducing both weight and manufacturing costs while maintaining or improving structural strength. One well-known method for increasing aircraft performance is to reduce airframe weight through the use of state-of-the-art materials, such as composites, having relatively high strength-to-weight and stiffness-to-weight ratios. Composite materials are generally described as being materials that include reinforcing fibers, such as graphite fibers, embedded in a polymeric matrix, such as an epoxy resin. Such materials will hereinafter be referenced as "fiber-reinforced composite" materials. Fiber-reinforced composite materials are usually supplied as fibrous sheets pre-impregnated with a curable or partially cured resin. The so-called "prepreg sheets" may then be laid up in laminated plies and cured to form rigid panel structures.

The use of honeycomb core structures in composite materials has many benefits including outstanding stiffness and strength at relatively low weight. The upper and lower skins can be made of carbon fiber-reinforced material resin impregnated composite laminates that are separated and bonded to a lightweight honeycomb core. The honeycomb core may thus be provided so as to increase the thickness of the composite panel to obtain higher panel stiffness properties with minimal weight gain. The core-to-skin adhesive joins the sandwich components and allows them to act as a single unitary structure exhibiting high torsional and bending rigidity.

Current manufacturing methods for composite sandwich panels include a vacuum bag processing technique. According to this process the prepreg sheets are laid-up in a rigid mold with a honeycomb core disposed between such layers. The preform structure is then enclosed by a vacuum bag to allow a vacuum to be drawn. The consolidation of the preform structure is thereby obtained using the vacuum bag and cured in an autoclave for additional pressure.

The conventional method discussed briefly above is suitable for laminate structures made with prepreg layers when flexible or formed honeycomb core and film adhesives are used. Laminate composite parts with complex geometries may also be produced with this method. Presently, these conventional laminate composites have thinner laminate thickness of no more than about 2 mm and a honeycomb core thickness of less than 25 mm with up to 30° chamfer. Moreover, such conventional laminate composites may only be cured at pressures up to about 345 kPa (50 psi) in order to avoid core crushing during cure with porosity in the laminate thereby resulting. Beyond pressure limits during the autoclave processing cure, a crushed core can sometimes occur due the high pressure in the autoclave. Laminates thicker than 2 mm can also exhibit undesirable porosity due low pressure cure which may cause part of the resin to flow into the core producing a laminate composite part of poor quality having a porosity higher than is required to meet production standards.

A number of approaches have been proposed so as to enable the production of quality honeycomb core laminate composite parts by preventing the part from being crushed during the curing process and thereby also avoiding the resulting porosity. For example, the chamfer angle of the part can be decreased so as to in turn reduce the core crush effect. However, a reduction of the chamfer angle for the part in turn reduces the effective area of the honeycomb core thereby changing the part stiffness.

WO 99/61233 A2 discloses stiffness-treated honeycomb sandwich structures which exhibit reduced core crush. The ASTM stiffness value of the material is increased by treating the material based on a fabric comprising a plurality of fibers and polymeric material.

It has also been proposed to use rigid adhesives (e.g., EPOCAST^{®} aerospace epoxy) in order to fill the cells at the edge of the honeycomb core so as to prevent core crushing during pressure curing. However, such a technique still does not prevent core crushing at higher cure pressures and when using thicker honeycomb cores. In addition, the use of such adhesive adds undesirable weight to the structure.

A proposal has also been disclosed in US Patent No. 4,680,216 (the entire content of which is expressly incorporated by reference herein), whereby honeycomb cores may be stabilized with reinforced epoxy resin-impregnated carbon fabric and adhesive film in order to prevent core crushing during high pressure curing. Such a technique however does not improve porosity of relatively thick laminate structures.

Another prior proposal is to cure the skins of the composite structure separately and then subsequently bonding such pre-cured skins to the honeycomb core. However, this technique presents various fabrication issues, including the relatively difficult necessity to lay and align the pre-cured skins properly on the honeycomb core when complex structural shapes are presented.

Finally it has also been proposed to use grooves or slots on the tooling in order to positionally hold the skin plies to thereby avoid the ply slippage in an attempt to prevent core crushing during pressure curing. However, such a technique only has a limited effect on core crushing.

While the various proposals noted above are suitable for their intended uses, there is still a need for improvements. It is therefore toward providing improvements to fabrication techniques for pressure-cured honeycomb core structures that the embodiments of the present invention are directed which minimizes (if not prevents entirely) core crushing during pressure curing so as to in turn minimize (if not eliminate entirely) part porosity due to low pressure cure and the possibility that resin may infiltrate the core.

### SUMMARY

The present invention provides a process for fabricating a honeycomb core according to claim 1. Embodiments of the invention are defined in the dependent claims.

The disclosed embodiments herein are directed toward processes for fabricating a honeycomb core composite laminate structure are provided. The processes include subjecting a honeycomb core preform having a honeycomb core (typically having chamfer sides with a chamfer angle of between 30° to 85°) and a stabilizing layer of at least one ply of a resin-impregnated fiber reinforced matrix material ("prepreg material") surrounding the honeycomb core to high temperature curing under an ambient atmospheric pressure condition (e.g., 0 psig). A final laminate layer formed of at least one ply of prepreg material may thereafter be laid up onto the stabilized preform to thereby provide a final product preform which is then subjected to high temperature and high pressure autoclave curing step under conditions sufficient to cure the final laminate layer and provide a final cured honeycomb core composite laminate structure.

In some preferred embodiments, the prepreg material will be comprised of epoxy resin impregnated carbon fiber matrix materials. Such prepreg material may include epoxy impregnated unidirectional carbon fibers in the form of a tape when employed as a stabilizing layer. Epoxy impregnated carbon fiber fabrics may be employed as the final laminate layer. The stabilizing layer may include respective plies of both epoxy-impregnated unidirectional carbon fibers and woven carbon fiber fabric.

In preferred embodiments, the epoxy resin impregnating the carbon fibers will cure at a high temperature of about 180°C (+/- about 10°C). The high pressure condition employed in the autoclave curing step is preferably between 345 kPa (50 psi) and 690 kPa (100 psi).

In order to enhance bonding of the stabilizing layer to the surfaces of the honeycomb core, an adhesive layer may be interposed between the stabilizing layer and the honeycomb core. In preferred embodiments, such adhesive layer is in the form of an epoxy film layer.

The autoclave curing step may include placing the final product preform into a vacuum bag and subjecting the final product preform to vacuum simultaneously during the high temperature and high pressure curing conditions of the autoclave curing step.

These and other aspects and advantages of the present invention will become more clear after careful consideration is given to the following detailed description of the preferred exemplary embodiments thereof.

### BRIEF DESCRIPTION OF ACCOMPANYING DRAWINGS

The disclosed embodiments of the present invention will be better and more completely understood by referring to the following detailed description of exemplary non-limiting illustrative embodiments in conjunction with the drawings of which:
FIG. 1 is a schematic block diagram showing the various steps in fabricating a stabilized honeycomb core laminate composite structure according to an embodiment of the invention;
FIGS. 2a and 2b are end perspective and elevational views, respectively, of a stabilized honeycomb core laminate composite preform that may be employed in the fabrication methods in accordance with an embodiment of the invention; and
FIGS. 3a and 3b are end perspective and elevational views, respectively, of a final cured stabilized honeycomb core laminate composite structure that may be employed in the fabrication methods in accordance with an embodiment of the invention.

### DETAILED DESCRIPTION

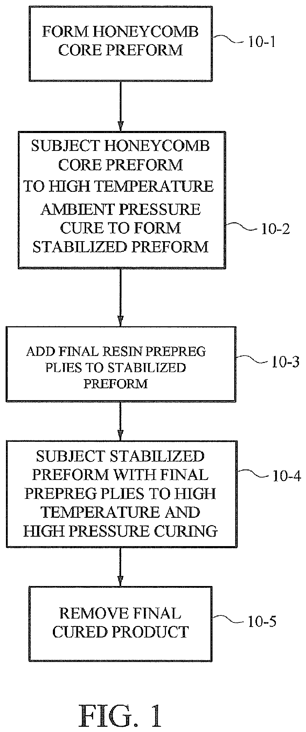

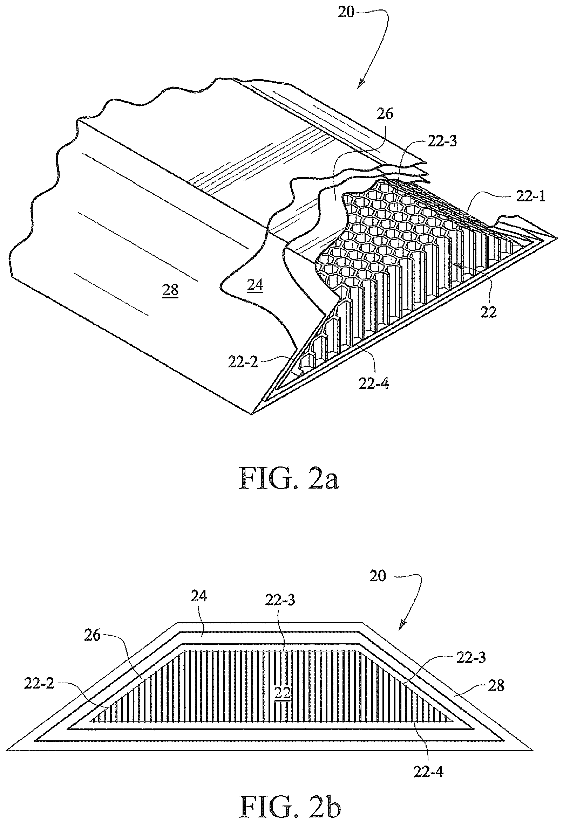

Accompanying FIG. 1 diagrammatically shows the steps that may be employed in the practice of one embodiment of a fabrication technique in accordance with the invention. As shown, the process will generally start with step 10-1 by the formation of a honeycomb core preform 20 as depicted schematically by FIGS. 2a and 2b. More specifically, the preform 20 will necessarily include a honeycomb core 22 of selected thickness having side edge chamfers 22-1, 22-2 as may be desired in the final part.

The honeycomb core 22 is enveloped by a prepreg tape layer 24 formed of a resin-impregnated fiber-reinforced matrix material in the form of a tape ("prepreg tape"). The prepreg tape layer 24 completely surrounds all sides of the honeycomb core 22, including the side edge chamfers 22-1, 22-2 as well as the upper and lower sides 22-3, 22-4, respectively, thereof.

One preferred form of the honeycomb core 22 includes cores formed of NOMEX^{®} polyaramid, phenolic resin, aluminum or the like. NOMEX^{®} polyaramid honeycomb cores are preferred. The overall height of the honeycomb core 22 can be greater than about 15mm, for example about 25 mm or greater with widths varying greatly as may be required. Chamfer angles at the side edges 22-1, 22-2 of between 30° up to 85°, typically between 60° to 85° are possible by the processes disclosed herein.

The individual cells of the honeycomb core 22 can have virtually any cell configuration geometry depending on the desires of the component designer and the resulting performance characteristics that may be required. Thus, the individual cells may have a hexagonal, square, rectangular, triangular, polygonal or any other cell configuration geometry that may be desired by the part designer.

One purpose of the prepreg tape layer 24 is to ensure that resin migration to the cells of the honeycomb core 22 is prevented. The prepreg tape layer 24 includes sufficient resin impregation to ensure good adhesion between the layer 24 and the laminate core 22 but does not have excess resin present which could migrate into the cells of the honeycomb core 22.

The prepreg tape layer 24 may be comprised of a single ply or multiple plies of resin-impregnated fiber-reinforced matrix material. If multiple plies of resin-impregnated fiber-reinforced matrix material are employed to form the prepreg tape layer, it is may be desirable to lay adjacent plies such that the fiber orientations thereof are biased at an angle relative to one another. By way of example, adjacent prepreg tape plies may have fiber orientations positioned at an angle greater than 0° up to 90° (e.g., about 45°) relative to one another.

The thickness of the prepreg tape layer is not critical but typically layer thickness of between 0.10 mm to 0.25 mm (e.g., about 0.19 mm) may be employed.

Virtually any reinforcing fibers may be employed in the resin-impregnated fiber-reinforced matrix material. Preferably, the resin-impregnated fiber-reinforced matrix material forming the prepreg tape layer 24 is an epoxy impregnated carbon (graphite) fiber tape. One preferred resin impregnated carbon fiber tape that may be employed for the prepreg tape layer 24 is HexPly® 8552/AS4 epoxy resin and carbon fiber matrix commercially available from Hexcel Corporation, having a cure temperature of about 180°C. Preferably, the carbon fibers in the tape layer 24 are unidirectional and are oriented so as to be in a direction which generally circumferential surrounds the honeycomb core 22 (i.e., are in a direction which is substantially perpendicular to the elongate axis of the core 22).

An optional adhesive film layer 26 may be interposed between the prepreg tape layer 24 and the honeycomb core 22 in order to facilitate bonding of the former to the latter. Any suitable adhesive film may be employed in this regard. Presently preferred is an epoxy adhesive film having a weight of between about 0,37 Pa (0.250 psf) to 0,74 Pa (0.500 psf), e.g., about 0,67 Pa (0.450 psf).

The preform 20 may also optionally be provided with a prepreg fabric layer 28 formed of resin impregnated fiber-fiber reinforced matrix material wherein the reinforcing fibers are woven into a fabric and the resin impregnates such fabric. The reinforcing fibers employed in the prepreg fabric layer 28 may be the same or different as compared to the reinforcing fibers employed in the prepreg tape layer 24. Additionally (or alternatively), the resin employed in the prepreg fabric layer 28 may be the same or different (but compatible) as compared to the resin that is employed in the prepreg tape layer 24. One preferred resin impregnated carbon fiber fabric that may be employed for the prepreg fabric layer 28 is HexPly® 8552/AS4 epoxy resin and plain woven carbon fiber fabric matrix commercially available from Hexcel Corporation, having a cure temperature of about 180°C.

The thus formed honeycomb preform 20 may thereafter be subjected to high temperature and ambient atmospheric pressure cure conditions in a first curing step 10-2 (FIG. 1). In this regard, the preform 20 will thus be subjected to elevated temperature conditions sufficient to cure the resin-impregnated fiber-reinforced matrix material forming the layer 24. For example, a cure temperature for the preferred epoxy resin impregnated carbon fiber matrix materials noted above would be about 180°C (+/- 10°C). Curing at such elevated cure temperatures is accomplished at ambient atmospheric pressure conditions. By "ambient atmospheric pressure conditions" is meant that the preform 20 is subjected to ambient atmospheric conditions existing at the time of elevated temperature curing (i.e., a gauge pressure of 0 psig). Thus, no increased pressure condition is created during the elevated ambient pressure cure according to step 10-2. A stabilized preform thus results from the ambient pressure high temperature curing of the first curing step 10-2.

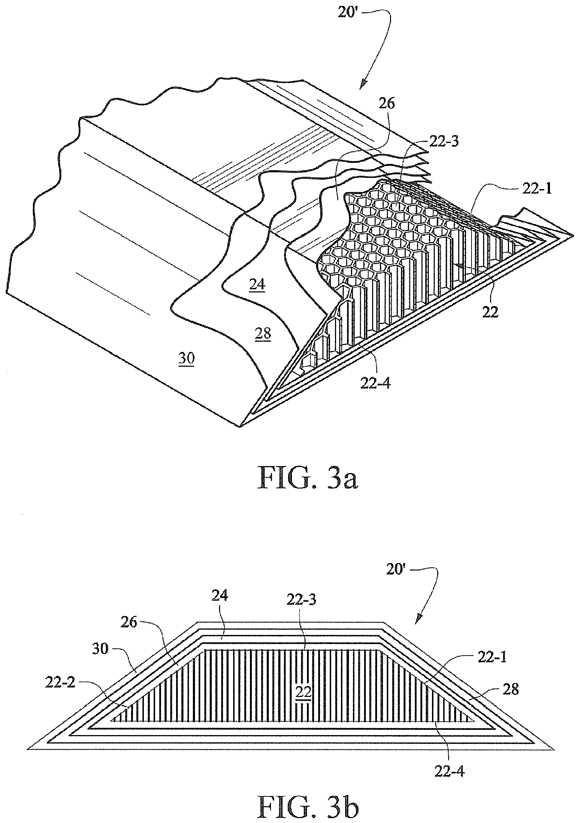

The stabilized preform may thereafter be enveloped or surrounded by one or more resin-impregnated fiber-reinforced matrix material plies ("prepreg plies") to thereby provide a final product (now designated by reference numeral 20' in FIGS. 3a and 3b). Such prepreg plies will thus envelope or surround the chamfer sides, top and bottom 22-1 through 22-4, respectively, to form a final laminate layer 30 (see FIGS. 3a and 3b). The prepreg plies forming final laminate layer 30 may be the same as those employed in the layers 24 and/or 28 of the preform 20 as described previously.

The final product preform 20' with the final laminate layer 30 laid up thereon will thus be in the final shape and dimension of the finished composite structure and may then be subjected to a vacuum-bagged high temperature and high pressure (autoclave) curing in an autoclaving step 10-4. In this regard, the final product preform 20' with the final laminate layer 30 plied thereon may be placed in a vacuum bag with the bagged article thereafter being placed in an autoclave. The temperature employed in the autoclaving step 10-4 will be sufficiently high so as to cure the prepreg plies forming the final laminate layer 30 (e.g., typically on the order of about 180°C (+/- 10°C)). Similarly, elevated pressures will be employed in step 10-4 sufficient to achieve full curing of the prepreg plies forming the laminate layer 30. Typically, pressures of from about 345 kPa (50 psi) to about 690 kPa (100 psi) will be employed which, as noted above, is substantially greater than the pressures employed in the prior art practices (i.e., which are limited to no more than about 345 kPa (50 psi) due to the possibility of core crushing). All of the parameters associated with the autoclave curing step 10-4 are in and of themselves conventional and will be well known to those skilled in this art.

In this regard, it will be appreciated that the initial ambient pressure cure step 10-2 as described above stabilizes the preform to such an extent that substantially greater pressures (i.e., up to about 690 kPa (100 psi)) can be achieved in the subsequent high pressure curing step 10-4 as compared to current practices (i.e., which can only achieve pressure curing of up to about 345 kPa (50 psi) since core crushing is encountered at higher pressures). Thus, according to the embodiments disclosed herein, a finished component part having a relatively high chamfer angle (e.g., up to about 85°) with substantially less porosity can be achieved as compared to prior (relatively low pressure) curing processes associated with the prior art.

Once the autoclave curing is completed by step 10-4, the finished honeycomb core laminate structure may be removed from the form in step 10-5 and employed as a part as-is and/or machined for fabrication of other aircraft related components. In this regard, the process employed by the embodiment described above form a honeycomb core laminate structure that is net final shape. That is, due to the stabilization that is provided by way of the ambient pressure cure step 10-2, the preforms 20 and 20' can be designed without regard to part shrinkage (e.g., without experiencing honeycomb core collapse). Thus, the preform 20 following the ambient pressure cure step 10-2 will be at near net final product shape except for the thickness to be provided by the final laminate layer 30. The laying up of the final laminate layer 30 and then subsequent autoclave curing by step 10-4 will allow the product removed from the autoclave in step 10-5 to be net final product shape. Thus, since the preforms 20 and 20' are near and at net final shape (i.e., no structural shrinkage needs to be factored into the structural design), the efficiencies of the fabrication process are improved.

### Example

A honeycomb core composite laminate structure was formed by assembling a lay-up of the preform 20 as shown in FIGS. 2a and 2b as follows:
- 25.4 mm NOMEX^{®} polyaramid honeycomb core 22 with phenolic resin and 85° chamfer sides;
- 0,67 Pa (0.45 psf (pound per square foot)) epoxy adhesive film as layer 26;
- 0.19 mm thickness reinforced carbon unidirectional tape preimpregnated with epoxy resin having a cure temperature of 180°C (HexPly® 8552/AS4 prepreg tape) as layer 24; and
- 0.21 mm thickness reinforced carbon plain weave fabric preimpregnated with epoxy resin having a cure temperature of 180°C (HexPly® 8552/AS4 prepreg tape) as layer 28

The preform 20 was then subjected to ambient pressure cure at a temperature of 180°C for a time sufficient to cure the layers 24 and 28 and bond such layers to the honeycomb core 22. Thereafter, an additional final laminate layer 30 was laid up onto the stabilized preform 20' to form a net final shaped structure which was subjected to vacuum bagged high temperature (180°C) and high pressure (690 kPa; 100 psi) autoclave curing. The resulting final structural product that was removed following full autoclave curing was of high quality and did not exhibit any shrinkage or porosity on the laminate.

## Claims

1. A process for fabricating a honeycomb core composite laminate structure comprising:
(a) providing a honeycomb core preform comprised of a honeycomb core and a stabilizing layer comprised of at least one ply of a resin-impregnated fiber reinforced matrix material surrounding the honeycomb core;
(b) subjecting the honeycomb core preform to high temperature curing under an ambient atmospheric pressure condition sufficient to cure the stabilizing layer to thereby obtain a stabilized honeycomb core preform;
(c) laying up a final laminate layer comprised of at least one ply of an additional resin-impregnated fiber-reinforced matrix material onto the stabilized honeycomb core preform to thereby provide a final product preform; and
(d) subjecting the final product preform to high temperature and high pressure autoclave curing conditions sufficient to cure the final laminate layer and provide a final cured honeycomb core composite laminate structure.

2. A process as in claim 1, wherein the high temperature employed in steps (b) and (d) is about 180°C.

3. A process as in claim 1 or claim 2, wherein the high pressure employed in step (d) is between 345 kPa (50 psi) to 690 kPA (100 psi).

4. A process as in one of the preceding claims, wherein the stabilizing layer comprises at least one ply of an epoxy resin-impregnated unidirectional carbon fiber tape.

5. The process of one of the preceding claims, wherein the final laminate layer comprises at least one ply of an epoxy resin-impregnated woven carbon fiber fabric.

6. The process of one of the preceding claims, further comprising providing an adhesive layer between the stabilizing layer and the honeycomb core.

7. The process of one of the preceding claims, wherein the stabilizing layer comprises at least one ply of an epoxy resin-impregnated woven carbon fiber fabric.

8. The process of one of the preceding claims, wherein step (d) comprises placing the final product preform in a vacuum bag and applying a vacuum to the bag during the autoclave curing conditions.

9. The process of one of the preceding claims, wherein the honeycomb core comprises chamfer sides having chamfer angles of between 30° to 85° to a surface plane of the honeycomb structure.

## Patentansprüche

1. Verfahren zum Herstellen einer Wabenkern-Komposit-Laminatstruktur, mit folgenden Schritten:
(a) Vorsehen einer Wabenkern-Vorform, die einen Wabenkern und eine Stabilisierungsschicht umfasst, die wenigstens eine Lage eines mit Harz imprägnierten faserverstärkten Matrixmaterials, welches den Wabenkern umgibt, umfasst;
(b) Aussetzen der Wabenlcern-Vorform gegenüber einer hohen Temperatur, die bei Umgebungsdruck ausreichend ist, um die Stabilisierungsschicht auszuhärten, um dadurch eine stabilisierte Wabenkern-Vorform zu erhalten;
(c) Auflegen einer End-Laminatschicht, die wenigstens eine Lage aus einem zusätzlichen mit Harz imprägnierten faserverstärkten Matrixmaterial umfasst, auf die stabilisierte Wabenkern-Vorform, um dadurch eine End-Produkt-Vorform zu erhalten; und
(d) Aussetzen der End-Produkt-Vorform gegenüber Autoklav-Aushärtungsbedingungen mit hoher Temperatur und hohem Druck, die ausreichend sind, um die End-Laminatschicht auszuhärten und eine ausgehärtete End-Wabenkern-Komposit-Laminatstruktur vorzusehen.

2. Verfahren nach Anspruch 1, wobei die in den Schritten (b) und (d) verwendete hohe Temperatur ungefähr 180°C beträgt.

3. Verfahren nach Anspruch 1 oder Anspruch 2, wobei der im Schritt (d) verwendete hohe Druck zwischen 345 kPa (50 psi) und 690 kPa (100 psi) liegt.

4. Verfahren nach einem der vorangehenden Ansprüche, wobei die Stabilisierungsschicht wenigstens eine Lage eines mit Epoxidharz imprägnierten unidirektionalen Kohlefaserbandes umfasst.

5. Verfahren nach einem der vorangehenden Ansprüche, wobei die End-Laminatschicht wenigstens eine Lage aus einem mit Epoxidharz imprägnierten gewebten Kohlefasergewebe umfasst.

6. Verfahren nach einem der vorangehenden Ansprüche, bei dem ferner eine Klebstoffschicht zwischen die Stabilisierungsschicht und den Wabenkern eingebracht wird.

7. Verfahren nach einem der vorangehenden Ansprüche, wobei die Stabilisierungsschicht wenigstens eine Lage aus einem mit Epoxidharz imprägnierten gewebten Kohlefasergewebe umfasst.

8. Verfahren nach einem der vorangehenden Ansprüche, wobei der Schritt (d) das Auflegen der End-Produkt-Vorform in eine Vakuumhülle und das Anlegen eines Vakuums an die Hülle während der Autoldav-Aushärtungsbedingungen umfasst.

9. Verfahren nach einem der vorangehenden Ansprüche, wobei der Wabenkern abgeschrägte Seiten mit Phasenwinkeln zwischen 30° und 85° zu einer Oberflächenebene der Wabenstruktur aufweist.

## Revendications

1. Procédé de fabrication d'une structure stratifiée composite à âme en nid d'abeilles comprenant :
(a) la fourniture d'une préforme à âme en nid d'abeilles composée d'une âme en nid d'abeilles et d'une couche de stabilisation composée d'au moins un pli d'un matériau matriciel renforcé par des fibres imprégnées de résine entourant l'âme en nid d'abeilles ;
(b) la soumission de la préforme à âme en nid d'abeilles à un durcissement à haute température dans une condition de pression atmosphérique ambiante suffisante pour durcir la couche de stabilisation afin d'obtenir une préforme à âme en nid d'abeilles stabilisée ;
(c) le dépôt d'une couche stratifiée finale composée d'au moins un pli d'un matériau matriciel renforcé par des fibres imprégnées de résine supplémentaire sur la préforme à âme en nid d'abeilles stabilisée afin d'obtenir une préforme de produit final ; et
(d) la soumission de la préforme de produit final à des conditions de durcissement en autoclave à haute température et haute pression suffisantes pour durcir la couche stratifiée finale et obtenir une structure stratifiée composite à âme en nid d'abeilles durcie finale.

2. Procédé selon la revendication 1, dans lequel la haute température utilisée dans les étapes (b) et (d) est d'environ 180°C.

3. Procédé selon la revendication 1 ou la revendication 2, dans lequel la haute pression utilisée dans l'étape (d) est comprise entre 345 kPa (50 psi) et 690 kPa (100 psi).

4. Procédé selon l'une des revendications précédentes, dans lequel la couche de stabilisation comprend au moins un pli d'une bande en fibre de carbone unidirectionnelle imprégnée de résine époxy.

5. Procédé selon l'une des revendications précédentes, dans lequel la couche stratifiée finale comprend au moins un pli d'un tissu en fibre de carbone tissée imprégné de résine époxy.

6. Procédé selon l'une des revendications précédentes, comprenant en outre la fourniture d'une couche adhésive entre la couche de stabilisation et l'âme en nid d'abeilles.

7. Procédé selon l'une des revendications précédentes, dans lequel la couche de stabilisation comprend au moins un pli d'un tissu en fibre de carbone tissée imprégné de résine époxy.

8. Procédé selon l'une des revendications précédentes, dans lequel l'étape (d) comprend le placement de la préforme de produit final dans un sac sous vide et l'application d'un vide sur le sac au cours de conditions de durcissement en autoclave.

9. Procédé selon l'une des revendications précédentes, dans lequel l'âme en nid d'abeilles comprend des côtés chanfreinés ayant des angles de chanfrein compris entre 30° et 85° par rapport à une surface plane de la structure en nid d'abeilles.
